Europäisches Patentamt

European Patent Office

Office européen des brevets

(11) Veröffentlichungsnummer: **0 439 099 A1**

## EUROPÄISCHE PATENTANMELDUNG

(21) Anmeldenummer: **91100700.3**

(22) Anmeldetag: **21.01.91**

(51) Int. Cl.⁵: **C01C** 3/16, B01J 29/06,
B01J 29/04

(30) Priorität: **23.01.90 DE 4001805**

(43) Veröffentlichungstag der Anmeldung:
**31.07.91 Patentblatt 91/31**

(84) Benannte Vertragsstaaten:
**AT BE DE FR GB IT NL**

(71) Anmelder: **SKW TROSTBERG
AKTIENGESELLSCHAFT
Dr.-Albert-Frank-Strasse 32
W-8223 Trostberg(DE)**

(72) Erfinder: **Weitkamp, Jens, Prof. Dr.
Rotkehlchenweg 4
W-2900 Oldenburg(DE)**
Erfinder: **Ernst, Stefan, Dr.
Reiherstrasse 23/1
W-7000 Stuttgart 80(DE)**
Erfinder: **Hammer, Benedikt, Dr.
Franz-Josef-Soll-Strasse 21
W-8223 Trostberg(DE)**
Erfinder: **Goll, Werner, Dr.
Frank-Caro-Strasse 51
W-8268 Garching 2(DE)**
Erfinder: **Röck, Heinrich, Dr.
Traunsteinerstrasse 9
W-8223 Trostberg(DE)**

(74) Vertreter: **Huber, Bernhard, Dipl.-Chem. et al
Möhlstrasse 22 Postfach 860 820
W-8000 München 86(DE)**

(54) **Verfahren zur Herstellung von Cyanamid.**

(57) Zur Herstellung von Cyanamid aus Harnstoff bzw. aus dessen thermischen Zersetzungsprodukten mit Hilfe eines mikroporösen Katalysators setzt man als Katalysator ein kristallines Alumophosphat insbesondere aus der Gruppe VPI-5, MCM-9, ALPO$_4$-8 oder AlPO$_4$-54 und/oder einen Zeolith, bei dem vorzugsweise die stark sauren Zentren an der gesamten (d.h. äußeren und inneren) Oberfläche inertisiert sind in nicht saurer oder nur schwach saurer Form mit einer Porenweite von 0,3 bis 1,5 nm ein.

EP 0 439 099 A1

## VERFAHREN ZUR HERSTELLUNG VON CYANAMID

Die Erfindung betrifft ein Verfahren zur Herstellung von Cyanamid aus Harnstoff oder aus Zersetzungsprodukten des Harnstoffes an mikroporösen Katalysatoren.

Cyanamid ist ein technisch wichtiges Ausgangsprodukt bei der Herstellung von Düngemitteln, Pflanzenschutzmitteln, Pharmazeutika und einer Anzahl weiterer wertvoller Produkte.

Aus EP 156 421 B1 ist bekannt, Cyanamid oder ein Cyanamid enthaltendes Gasgemisch durch Umsetzung von Harnstoff oder dessen Zersetzungsprodukten (Cyansäure/Isocyansäure) an Zeolith-Katalysatoren mit einem Porendurchmesser von maximal 0,8 nm herzustellen. Die Umsetzung erfolgt bei Temperaturen zwischen 200 und 600 °C und bei Verweilzeiten zwischen 0,1 s und einigen Minuten, bevorzugt zwischen 0,1 und 30 Sekunden. Als Partialdruck des Einsatzstoffes werden Werte zwischen 0,1 und 3 bar angegeben. Bei diesen Katalysatoren handelt es sich um unterschiedliche stark saure Mordenit-Zeolithe. In der Veröffentlichung P.C. van Geem et al., i²-Procestechnologie, Nr. 2, S. 11/13, 1987 wird darüberhinaus auch über Versuchsergebnisse mit den Zeolithen H-X, H-ZSM-5, H-Clinoptilolith und H-Erionit/Chabasit berichtet. Die besten Ergebnisse bezüglich der Selektivität für Cyanamid wurden danach mit solchen Katalysatoren erzielt, bei denen die aktiven Zentren an der äußeren Oberfläche der Zeolith-Kristallite durch selektiven Ionenaustausch nach EP 086 643 A1 vergiftet wurden. Bei solcherart modifizierten Zeolithen soll die Bildung des unerwünschten sperrigen Melamins an der äußeren Kristallit-Oberfläche zu Gunsten der Bildung von Cyanamid im formselektiv wirkenden Poreninneren deutlich zurückgedrängt sein.

Gemäß den Beispielen der EP 156 421 B1 werden bei Reaktionstemperaturen zwischen 390 und 420 °C nur Umsätze von maximal 36,3 % erreicht. Als Produkte werden ausschließlich Cyanamid und Melamin genannt, wobei nicht klar wird, ob die angegebenen Prozentzahlen auf die Masse oder auf die Stoffmenge der Produkte bezogen sind. Hinweise auf weitere mögliche Nebenprodukte werden nicht gegeben.

Durch die niedrigen erzielten Umsätze wird ein erheblicher Trennaufwand Edukt/Produkt erforderlich. Dieser ist gekoppelt mit großen zurückzuführenden Stoffströmen von nicht umgesetztem Harnstoff und/oder nicht umgesetzter Isocyansäure/Cyansäure.

Der Erfindung liegt daher die Aufgabe zugrunde, ein Verfahren zur Herstellung von Cyanamid aus Harnstoff bzw. aus dessen thermischen Zersetzungsprodukten mit Hilfe eines mikroporösen Katalysators zu entwickeln, welches die genannten Nachteile des Standes der Technik nicht aufweist, sondern hohe Umsätze mit guten Selektivitäten kombiniert und gleichzeitig die Selektivitäten für unerwünschte Nebenprodukte, wie z.B. Melamin verringert.

Diese Aufgabe wird erfindungsgemäß dadurch gelöst, daß man als Katalysator ein kristallines Alumophosphat und/oder einen Zeolith in nicht saurer oder nur schwach saurer Form mit einer Porenweite von 0,3 bis 1,5 nm einsetzt. Bevorzugt wird eine Porenweite über 0,8 nm.

Es hat sich nämlich überraschenderweise gezeigt, daß bei Verwendung der erfindungsgemäßen Katalysatoren wesentlich höhere Umsätze an Harnstoff bzw. Isocyansäure/Cyansäure erzielt werden können und gleichzeitig die Selektivitäten für Cyanamid im Vergleich zum Stand der Technik sehr hoch sind.

Außerdem werden beim Verfahren der Erfindung zusätzlich wertvolle Nebenprodukte mit NCN-Struktur gebildet wie z.B. Dicyandiamid, Cyanharnstoff und Guanidincarbonat, was ebenfalls nicht vorhersehbar war. Schließlich sind auch die Selektivitäten hinsichtlich des unerwünschten Nebenproduktes Melamin mit weit unter 5 %, bezogen auf die Masse des umgesetzten Harnstoffs, wesentlich niedriger als beispielsweise in der EP 156 421 B1 beschrieben.

Beim Verfahren der Erfindung wird die Zersetzung des Harnstoffs an speziellen Katalysatoren auf Basis von Alumophosphaten und Zeolithen mit einer Porenweite von 0,3 bis 1,5 nm vorgenommen.

Zur Unterscheidung zwischen stark sauren und schwach sauren Zentren in Zeolith-Katalysatoren eignet sich die Methode der temperaturprogrammierten Desorption von Ammoniak wie sie z.B. beschrieben ist in: H.G. Karge und V. Dondur in J. Phys. Chem. 94, 765/772 (1990).

Unter den erfindungsgemäß verwendeten Zeolithen mit schwach sauren Zentren sind solche Katalysatoren zu verstehen, bei denen der überwiegende Teil des adsorbierten Ammoniaks bei Temperaturen unterhalb von ca. 350 °C desorbiert wird (zum Vergleich: ein HZSM-5-Zeolith mit stark sauren Zentren besitzt ein Maximum in der Desorptionsgeschwindigkeit von Ammoniak bei Temperaturen um 450 °C).

Unter Alumophosphaten sind im Rahmen der vorliegenden Erfindung insbesondere auch die Vertreter der Silicoalumophosphate (SAPOs), Metallalumophosphate (MeAPOs; Me steht z.B. für Co, Fe, Mg, Mn, Zn), Elementalumophosphate (ElAPOs; El steht z.B. für As, B, Be, Ga, Ge, Li, Ti), Metallsilicoalumophosphate (MeAPSOs) und Elementsilicoalumophosphate (ElAPSOs) zu verstehen, wie sie in der Fachliteratur definiert und beschrieben sind (z.B. E.M. Flanigen et al., "Innovation in Zeolite Materials Science", P.J. Grobet et al., Hrsg., S. 13/27, Studies in Surface Science and Catalysis, Bd. 37, Elsevier Science Publishers, Amsterdam, Oxford, New York, Tokyo, 1988).

Besonders bevorzugt wird die Verwendung eines Alumophosphates, ausgewählt aus der Gruppe VPI-5, MCM-9, $AlPO_4$-8 oder $AlPO_4$-54.

Neben den Alumophosphaten oder an ihrer Stelle können beim erfindungsgemäßen Verfahren auch Zeolith-Katalysatoren eingesetzt werden, die keine oder nur schwach saure Eigenschaften aufweisen, d.h. deren stark saure Zentren durch geeignete Maßnahmen inertisiert wurden oder die von vornherein keine oder nur schwach saure Zentren aufweisen, wie durch Charakterisierung mittels temperaturprogrammierter $NH_3$-Desorption, IR-Spektroskopie oder geeigneter katalytischer Testreaktionen ermittelt werden kann. Erfindungswesentlich ist hierbei, daß nicht - wie in der EP 156 421 B1 beschrieben - nur die äußeren Oberflächen der stark sauren Zeolithe inertisiert wurden, sondern auch deren Inneres, d.h., daß nur nicht saure bzw. schwach saure Zentren gleichmäßig über die gesamte, d.h. innere und äußere Oberfläche der Katalysatoren verteilt sind.

Die Inertisierung der stark sauren Zentren ist auf verschiedenen Wegen möglich, wobei sich der Ionenaustausch als besonders vorteilhaft erwiesen hat. Hierbei werden die stark sauren Zentren an der gesamten inneren und äußeren Oberfläche der Kristallite mit ein- oder mehrwertigen Ionen neutralisiert und/oder blockiert. Bei den einwertigen Ionen werden Alkaliionen wie z.B. $Na^+$ oder $K^+$, bei den mehrwertigen Ionen Erdalkaliionen wie z.B. $Ba^{2+}$ bevorzugt.

Aus der Gruppe der Zeolithe eignen sich für die Erfindung insbesondere die siliciumreichen Materialien mit dreidimensional verzweigtem Porensystem, wie z.B. Y-Zeolith, Zeolith ZSM-20, Zeolith Beta, ZSM-5 oder ZSM-11. Aber auch weitporige, aluminiumreichere Zeolithe, wie z.B. Zeolith L, haben sich als wirksam in der Erfindung erwiesen, wenn sie wie oben beschrieben modifiziert waren.

Die Inertisierung der stark sauren Zentren kann auch durch Dealuminierung nach bekannten Methoden erfolgen, wie z.B. nach der Methode von Beyer und Belenykaja ("Catalysis by Zeolites", B. Imelik et al., Hrsg., S. 203/210, Studies in Surface Science and Catalysis, Bd. 5, Elsevier, Amsterdam, Oxford, New York, Tokyo, 1980), durch Behandlung der Zeolithe bei erhöhter Temperatur mit $SiCl_4$-Dämpfen oder durch Behandlung mit $(NH_4)_2SiF_6$ in wäßriger Suspension nach der Methode von Skeels und Breck (Proceedings of the 6th International Zeolite Conference, D.H. Olson und A. Bisio, Hrsg., S. 87/96, Butterworth Guildford, England, 1984).

In einer bevorzugten Ausführungsform wird als dealuminierter Zeolith ein dealuminierter Y-Zeolith eingesetzt.

Die Zersetzung des Harnstoffes erfolgt gemäß der Erfindung vorteilhaft bei Temperaturen von 300 bis 700 ° C, vorzugsweise von 450 bis 650 ° C.

Die Umsetzung wird vorzugsweise so durchgeführt, daß man den Harnstoff in einer Wirbelschicht verdampft, wobei sich dieser zu einer Mischung aus Isocyansäure und Cyansäure zersetzt. Diese Zersetzungsprodukte werden mit Hilfe eines Wirbel- bzw. Schleppgases wie Ammoniak dem Festbettreaktor, der den erfindungsgemäß verwendeten Katalysator enthält, zugeführt. Nach einer Verweilzeit von 0,1 bis 10 Sekunden wird das Reaktionsgemisch abgekühlt und gegebenenfalls aufgearbeitet.

Mit Hilfe des erfindungsgemäßen Verfahrens ist es möglich, den Umsatz bezogen auf Harnstoff auf > 80 % zu steigern, wobei die Selektivitäten bezüglich Cyanamid bei etwa 50 % und bezüglich des unerwünschten Melamins bei ≤ 2 % liegen.

Die nachfolgenden Beispiele sollen die Erfindung näher erläutern.

Beschreibung der Versuchsapparatur

Die Versuche werden bei Atmosphärendruck in einer Strömungsapparatur durchgeführt. Als Ausgangsstoff wird Harnstoff verwendet. Dieser wird über eine Dosierschnecke in eine auf Temperaturen zwischen 400 und 600 ° C thermostatisierte Wirbelschicht aus Sand eingebracht, wo der Harnstoff verdampft und sich dabei zu einer Mischung aus Isocyansäure und Cyansäure zersetzt. Als Wirbelgas und Schleppgas wird Ammoniak verwendet. Das derart hergestellte Gasgemisch wird über beheizte Leitungen dem Festbettreaktor mit dem Zeolith-Katalysator zugeführt. Die Reaktionsprodukte werden in einer Kühlfalle direkt hinter dem Reaktor bei -20 ° C auskondensiert und nach der Aufarbeitung analysiert. Mittels quantitativer Dünnschichtchromatographie werden folgende Produkte analytisch erfaßt: Harnstoff, Cyanamid, Dicyandiamid, Cyanharnstoff, Guanidincarbonat und Melamin.

Durchführung der Versuche

Die Katalysatoren werden ohne Binder gepreßt, gemahlen und gesiebt. Die Kornfraktion von 0,2 bis 0,3 mm wird für die katalytischen Experimente eingesetzt. Typischerweise beträgt das Schüttvolumen des Katalysators ca. 3 cm$^3$; vor der Verwendung wurden die Katalysatoren in-situ im Stickstoffstrom ($V_{N2}$ = 6 l/h) bei 550 °C 12 h lang getrocknet.

Die nachfolgend aufgeführten Beispiele beschreiben typische Katalysatoren und typische Produktselektivitäten.

**Beispiel 1**

Zeolith Beta (Porenweite ca. 0,7 nm) mit einem Si/Al-Verhältnis von 11 wurde wie im US Patent Re 28 341 beschrieben synthetisiert, 18 h bei 540 °C in Luft calciniert und anschließend einem einmaligen Ionenaustausch in einer 0,1 normalen Kochsalzlösung unterworfen. Der so hergestellte Katalysator wird als Na-Beta bezeichnet. Die Reaktionsbedingungensowie der Harnstoffumsatz und die Produktselektivitäten sind in Tabelle 1 angegeben. Bei diesem Beispiel und in allen folgenden Beispielen wurden die Produktselektivitäten bezogen auf die Masse an umgesetztem Harnstoff (bezogen auf die Reaktionsgleichung: 2 Harnstoff → 1 Cyanamid + 1 $CO_2$ + 2 $NH_3$).

**Beispiel 2**

Ein kommerziell erhältlicher Zeolith L (Porenweite ca. 0,71 nm) mit einem Si/Al-Verhältnis von 3,0 wird einem zweifachen Ionenaustausch mit einer 0,1 normalen Kochsalzlösung (Na-L) oder einer 0,1 normalen wäßrigen Lösung von Bariumchlorid (Ba-L) unterzogen. Die beiden Katalysatoren werden bei 120 °C getrocknet und dann in der Harnstoffumsetzung getestet. Die Ergebnisse sind in Tabelle 1 zusammengefaßt.

**Beispiel 3**

Das Alumophosphat VPI-5 (Porenweite ca. 1,2 nm) wurde gemäß WO 89/01 912 synthetisiert und zunächst bei 600 °C in einem Strom trockener Luft calciniert, um das bei der Synthese verwendete organische Templat abzubrennen. VPI-5 wurde dann in der Harnstoffumsetzung getestet. Die Ergebnisse zeigt Tabelle 1.

**Beispiel 4**

Ein H-Y-Zeolith (Porenweite ca. 0,74 nm) wurde nach der Methode von Skeels und Breck durch Behandlung mit einer wäßrigen Lösung von $(NH_4)_2SiF_6$ dealuminiert. Dabei nahm sein Si/Al-Verhältnis von ursprünglich 2,4 auf 5,6 zu. Die Ergebnisse mit dem so hergestellten H-Y-Zeolith zeigt Tabelle 1.

Tabelle 1

Versuchsergebnisse mit den Katalysatoren der Beispiele 1 bis 4

| Beispiel | Katalysator | T, °C | t, s | $X_{Ha}$, % | $S_{Cy}$, % | $S_{DCD}$, % | $S_{CH}$, % | $S_{GC}$, % | $S_{Mel}$, % |
|---|---|---|---|---|---|---|---|---|---|
| 1 | Na-Beta | 500 | 2 | 93,4 | 51,7 | 7,3 | 10,9 | 0,7 | 2,0 |
| 2 | Na-L | 500 | 2 | 80,9 | 49,6 | 14,4 | n.b. | n.b. | n.b. |
| 2 | Ba-L | 500 | 2 | 87,2 | 55,8 | 6,5 | 9,0 | 2,0 | 2,2 |
| 3 | VPI-5 | 630 | 4 | 89,2 | 49,8 | 10,0 | 5,7 | 1,0 | 1,2 |
| 4 | H-Y | 550 | 2 | 87,5 | 48,6 | 8,9 | 7,5 | 0,9 | 2,1 |

Abkürzungen: T: Temperatur; t: Verweilzeit; X: Umsatz; S: Selektivität;
Ha: Harnstoff; Cy: Cyanamid; DCD: Dicyandiamid; CH: Cyanharnstoff;
GC: Guanidincarbonat; Mel: Melamin; n.b.: nicht bestimmt

**Patentansprüche**

1. Verfahren zur Herstellung von Cyanamid aus Harnstoff bzw. aus dessen thermischen Zersetzungsprodukten mit Hilfe eines mikroporösen Katalysators,
**dadurch gekennzeichnet,**
daß man als Katalysator ein kristallines Alumophosphat und/oder einen Zeolith in nicht saurer oder nur schwach saurer Form mit einer Porenweite von 0,3 bis 1,5 nm einsetzt.

2. Verfahren nach Anspruch 1,
   **dadurch gekennzeichnet,**
   daß man als Katalysator ein Alumophosphat, ausgewählt aus der Gruppe VPI-5, MCM-9, ALPO$_4$-8 oder AlPO$_4$-54, verwendet.

3. Verfahren nach Anspruch 1,
   **dadurch gekennzeichnet,**
   daß ein Zeolith-Katalysator verwendet wird, bei dem die stark sauren Zentren an der gesamten (d.h. äußeren und inneren) Oberfläche inertisiert sind.

4. Verfahren nach Anspruch 3,
   **dadurch gekennzeichnet,**
   daß der Zeolith-Katalysator durch Ionenaustausch mit ein- oder mehrwertigen Kationen inertisiert ist.

5. Verfahren nach Anspruch 3,
   **dadurch gekennzeichnet,**
   daß der Zeolith-Katalysator durch Dealuminierung inertisiert ist.

6. Verfahren nach Anspruch 5,
   **dadurch gekennzeichnet,**
   daß man als dealuminierten Zeolith einen dealuminierten Y-Zeolith verwendet.

7. Verfahren nach den Ansprüchen 1 bis 6,
   **dadurch gekennzeichnet,**
   daß man die Zersetzung des Harnstoffes bei 300 bis 700°C vornimmt.

8. Verfahren nach Anspruch 7,
   **dadurch gekennzeichnet,**
   daß man die Zersetzung bei 450 bis 650°C vornimmt.

9. Verfahren nach den Ansprüchen 1 bis 8,
   **dadurch gekennzeichnet,**
   daß die Kontaktzeit des Reaktionsgemisches am Katalysator 0,1 bis 10 Sekunden beträgt.

Europäisches
Patentamt

**EUROPÄISCHER
RECHERCHENBERICHT**

Nummer der Anmeldung

**EP 91 10 0700**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 156 421 (STAMICARBON) <br> * das ganze Dokument * <br> - - - | 1,4,5 | C 01 C <br> 3/16 <br> B 01 J 29/06 <br> B 01 J 29/04 |
| D,X | i2-Procestechnologie no. 2, 1987, Seiten 11 - 13; P.C. van Geem et al.: "Synthese van cyaanamide uit ureum." <br> * das ganze Dokument * <br> - - - | 1,4,5 | |
| D,A | EP-A-0 086 543 (STAMICARBON) <br> * das ganze Dokument * <br> - - - | 1,4,5 | |
| D,A | NN-A- (Ed.)Stud in Surf Sc and Cat, Bd 37, Else-viers(Amster dam,'88), p 13-27; E.M. Flanigen: Struct, synth and physicochem concepts in aluminophosphatebased molecular sieves. <br> - - - | 2 | |
| A | US-A-3 682 996 (KERR) <br> * Spalte 1, Zeile 41 - Spalte 2, Zeile 26 * <br> - - - | 3 | |
| A | US-A-4 550 091 (SIKKENGA) <br> - - - - - | | |

RECHERCHIERTE
SACHGEBIETE (Int. Cl.5)

C 01 C
B 01 J

Der vorliegende Recherchenbericht wurde für alle Patentansprüche erstellt

| Recherchenort | Abschlußdatum der Recherche | Prüfer |
|---|---|---|
| Den Haag | 03 April 91 | ZALM W.E. |